# EUROPEAN PATENT APPLICATION

(11) **EP 2 374 592 A2**
(43) Date of publication of application: **12.10.2011**
(21) Application number: 11161166.1
(22) Date of filing: 05.04.2011
(51) Int. Cl.: B29C 45/00, B29C 59/16

(54) **Method of fabricating injection-molded product**

(30) Priority: 07.04.2010 KR 20100032066
(71) Applicant: Samsung Electronics Co., Ltd., Suwon-si, Gyeonggi-do 442-742 (KR)
(72) Inventor: Lee, Pil-Woo, 442-742, Gyeonggi-do (KR); Park, Jong-Bae, 442-742, Gyeonggi-do (KR); Kim, Jong-Hwa, 442-742, Gyeonggi-do (KR); Kim, Hak-Ju, 442-742, Gyeonggi-do (KR); Seol, Gi-Won, 442-742, Gyeonggi-do (KR)
(74) Representative: Jenkins, Richard Gavin

(57) **Abstract**

A method of fabricating an injection-molded product includes: manufacturing an injection-molded material using a mold; forming a metal layer on an inner or outer surface of the injection-molded material; and removing a portion of the metal layer using a laser, and forming a pattern. Since the injection-molded product fabricated through the method has pattern with a metallic feeling, it can provide a metallic feeling of a high brightness that cannot be realized by a method such as printing and can provide a cubic feeling due to removal of a metal layer. The method provides portable products such as cases for cosmetic products and portable terminals with various visually appealing feelings, allowing users to express various individual styles or preferences using the portable products.

## Description

### BACKGROUND OF THE INVENTION

### 1. Field of the Invention

The present invention relates to an injection-molded product. More particularly, the present invention relates to a method of fabricating an injection-molded product that makes an exterior design of injection-molded products, such as a case of a portable terminal, appealing.

### 2. Description of the Related Art

An injection-molded product refers to a synthetic resin product which is fabricated to have a shape formed in a mold after a molten resin is injected into the mold. As injection-molding can easily mass-produce products, it is very popular and is widely used in the fabrication of many of modern life's daily necessities, such as home appliances, electronic devices, etc.

In particular, injection molded products are used in cosmetic product cases, gaming devices, portable terminals such as mobile phones, and the recent trend is that such portable products are also becoming individual fashion items. Due to the trend, users of portable terminals often purchase separate accessories for their portable terminal including portable pouches, or decorate the portable terminals using cases mounted to the portable terminals themselves.

Due to various demands of users, there have been many efforts made to vary the appearances of case of portable products. For example, a color of a product may be simply selected variously, a product is painted such that its color is gradually changed in the product, or a pattern is engraved on a surface of a product to provide a visual effect.

Meanwhile, other types of decorations include patterns that have been engraved on outer surface of injection-molded products using separate films or through printing processes. A new visual effect may be provided on the outer surfaces of portable products by engraving patterns through the method. However, there occur difficulties in securing the durability of patterns if separate films are attached onto the outer surfaces of injection-molded products or patterns are printed on the outer surfaces of injection-molded products. That is, patterns may be often damaged due to exposure of portable products to an exterior environment or impacts caused when the portable products are dropped. Besides, since only a planar visual effect is simply provided by attaching a film or printing a pattern, there is a limit in satisfying the various demands of users.

### SUMMARY OF THE INVENTION

Accordingly, an exemplary aspect of the present invention provides a method of fabricating an injection-molded product that provides various visual effects to the appearance of a case of a portable product such as a portable terminal.

Also, another exemplary aspect of the present invention provides a method of fabricating an injection-molded product that provides a metallic feeling of a high brightness to the appearance of a portable product through a pattern by a metal layer and selectively provides a cubic feel to the portable product.

In accordance with another exemplary aspect of the present invention, there is provided a method of fabricating an injection-molded product, the method preferably including the steps of: manufacturing an injection-molded material using a mold; forming a metal layer on an inner or outer surface of the injection-molded material; and removing a portion of the metal layer using a laser, and forming a pattern.

Preferably, the metal layer may be formed through a type of deposition process or a painting process.

Preferably, the injection-molded product may be made of a transparent or semi-transparent material.

Preferably, the method may further include: painting an inner surface of the injection-molded material after removing a portion of the metal layer and forming the pattern on the inner surface of the injection-molded product, and forming a painted layer.

Preferably, a paint used to paint the inner surface of the injection-molded material may provide an opaque color after drying.

Preferably, the method may further include: forming a clear coating layer on the outer surface of the injection-molded material.

Preferably, the method may also further include: forming a base coating layer on the outer surface of the injection-molded material prior to forming the clear coating layer.

Preferably, the method may also further include: forming a clear coating layer on the inner surface of the injection-molded material, after forming the metal layer on the outer surface of the injection-molded material, removing a portion of the metal layer, and forming the pattern on the outer surface of the injection-molded material.

Preferably, the method may also further include: forming a base coating layer on the outer surface of the injection-molded material prior to forming the clear coating layer.

Preferably, the metal layer is formed by depositing tin or aluminum.

In accordance with another exemplary aspect of the present invention, there is provided a method of fabricating an injection-molded product, the method preferably includes: manufacturing an injection-molded material using a mold; and machining an inner or outer surface of the injection-molded material using a laser, and forming a pattern.

Preferably, the method may further include: machining the outer surface of the injection-molded material using a laser, and forming a clear coating layer on the outer surface of the injection-molded material machined using a laser.

Preferably, the method may also further include: forming a base coating layer on the outer surface of the injection-molded material prior to forming the clear coating layer.

Preferably, the injection-molded material may be made of a transparent or semi-transparent material and the inner surface of the injection-molded material is machined preferably using a laser.

Preferably, the method may also further include: painting the inner surface of the injection-molded material machined using a laser.

Preferably, the method may also further include: forming a clear coating layer on the inner surface of the injection-molded material.

Preferably, the method may also further include: forming a base coating layer on the outer surface of the injection-molded material prior to forming the clear coating layer.

Since the injection-molded product fabricated through the method according to the presently claimed has a pattern with a metallic feeling, it can provide a metallic feeling of a high brightness that cannot be realized by a method such as printing and can provide a cubic feeling due to the removal of a metal layer. Accordingly, it can provide portable products such as cases for cosmetic products and portable terminals with various visually appealing feelings, allowing users to express various individual styles or preferences using the portable products.

### BRIEF DESCRIPTION OF THE DRAWINGS

The above and other exemplary aspects, features and advantages of the present invention will become more apparent from the following detailed description taken in conjunction with the accompanying drawings, in which:
FIG. 1 is a flowchart illustrating a method of fabricating an injection-molded product according to the first exemplary embodiment of the present invention;
FIG. 2 is a flowchart illustrating a method of fabricating an injection-molded product according to the second exemplary embodiment of the present invention;
FIG. 3 is a flowchart illustrating a method of fabricating an injection-molded product according to the third exemplary embodiment of the present invention; and
FIG. 4 is a flowchart illustrating a method of fabricating an injection-molded product according to the fourth exemplary embodiment of the present invention.

### DETAILED DESCRIPTION

Hereinafter, exemplary embodiments of the present invention will be described with reference to the accompanying drawings. In the following description of the present invention, a detailed description of well-known functions and configurations may be omitted when such inclusion may obscure appreciation of the subject matter of the present invention by a person of ordinary skill in the art with such well-known functions.

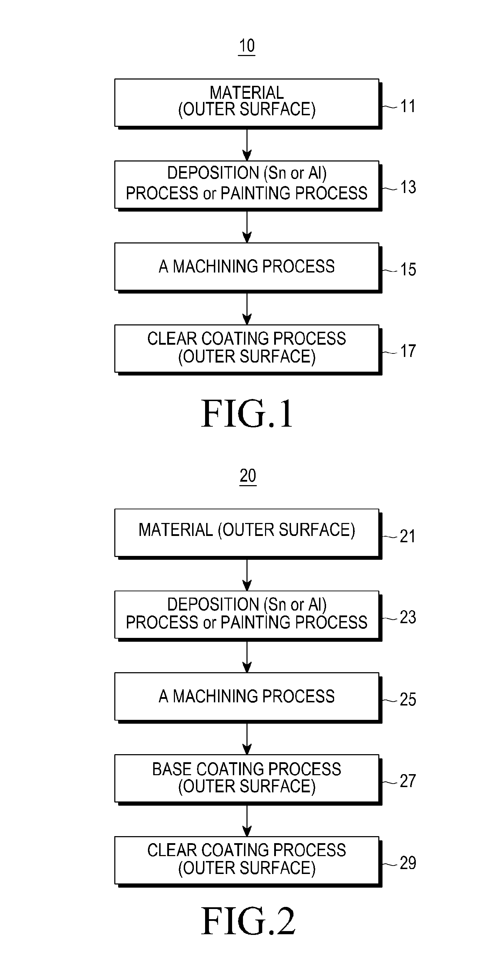

FIGS. 1 to 4 illustrate exemplary operation via flowcharts of methods 10, 20, 30, and 40 of fabricating injection-molded products according to exemplary embodiments of the present invention. As shown in FIGS. 1 to 4, in the methods 10, 20, 30, and 40 of fabricating injection-molded products according to the present invention, after fabricating an injection-molded material using a mold, a metal layer is formed on its outer or inner surface and then various patterns are formed by removing a portion of the metal layer using a laser.

First, referring now to FIG. 1, a method 10 of fabricating an injection-molded product according to a first exemplary embodiment of the present invention includes a step 11 of fabricating an injection-molded material through a forming process using a mold, a step 13 of forming a metal layer through a deposition or painting process, and a step 15 of removing a portion of the metal layer and forming a pattern, preferably via a laser process. Preferably, the method may also include a step 17 of forming a clear coating layer, i.e. a hardened protective layer on an outer surface of the manufactured injection-molded material. The method of fabricating an injection-molded product according to this exemplary embodiment of the present invention is used to form the metal layer on the outer surface of the injection-molded material.

However, according to the exemplary embodiment of the present invention, the metal layer is formed to provide a metallic feeling of a higher brightness in forming a pattern having a metal property, but may not be formed. In the method of fabricating an injection-molded product according to the present invention, a color of a machined surface or a machining depth may be regulated by adjusting an output strength, an incident angle, or an irradiation time of a laser in machining the surface of the opaque injection-molded product. As a result, although the exemplary embodiments of the present invention generally include a step of forming a metal layer, the metal layer does not require being formed and can be realized as a pattern or a color by directly irradiating a laser on the inner or outer surface of an injection-molded product in the step of machining the injection-molded product using a laser.

As described above, the injection-molded material is formed by injecting a molten resin into a mold and may be applied to various types of products because it is formed using a mold having a shape suitable for products such as accessories, cases for cosmetic products, or cases for portable terminals.

The metal layer is formed by depositing a metal, for example, for example, tin or aluminum, or by painting with a paint containing a metal component, and preferably is formed on the outer surface of the injection-molded material. Meanwhile, a metal component of the metal layer may be properly selected by those skilled in the art, considering a machining property of a laser or an intrinsic color of the metal component.

Next, a portion of the metal layer is removed using a laser to form, for example, a logo of a manufacturer or a telecom company, a shape of a character, or a regular or irregular pattern. The metal layer is contrasted with a portion of the injection-molded material exposed by removing a portion of the metal to visually provide a metallic feeling of a high brightness, and a cubic effect may be partially provided depending a machining type using a laser. The pattern formed in this way is exposed to the outside (exterior of the workpiece) to improve a visually appealing feeling of the product.

After the pattern is formed using a laser, the clear coating layer is formed on the outer surface of the injection-molded material to protect the metal layer forming the pattern. Although the pattern is made of a metal material, since it is exposed to the outside, it is vulnerable to scratching or an impact. Thus, the clear coating layer is preferably formed to prevent scratching or impact damage.

FIG. 2 illustrates a method 20 of fabricating an injection-molded product according to the second exemplary embodiment of the present invention. The method 20 of fabricating an injection-molded product according to the second exemplary embodiment of the present invention is similar to the first exemplary embodiment of the present invention, but also adds an additional step in that a base coating layer is formed on the outer surface of the injection-molded material before the clear coating layer is formed. Thus, since a step 21 of manufacturing an injection-molded material, a step 23 of forming a metal layer through a deposition or painting process, a step 25 of removing a portion of the metal layer using a laser, and forming a pattern, and a step 29 of forming a clear coating layer on the outer surface of the injection-molded material can be easily understood through the above-described first exemplary embodiment such that a detailed description thereof will be omitted and a step 27 of forming the base coating layer will be described in more detail.

The step 27 of forming the base coating layer is a step of applying a base coat on the outer surface of the injection-molded material prior to forming the clear coating layer, in which case a color of a final injection-molded product is determined by a color of the base coat. According to the present invention, the base coating layer preferably is transparent or semi-transparent so as to have a certain color after it is hardened to permit the pattern made in the metal layer can be seen (from the outside) in a finished product.

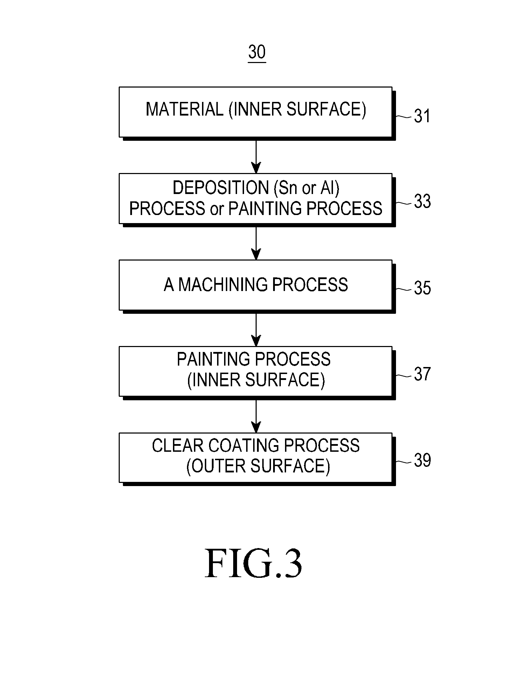

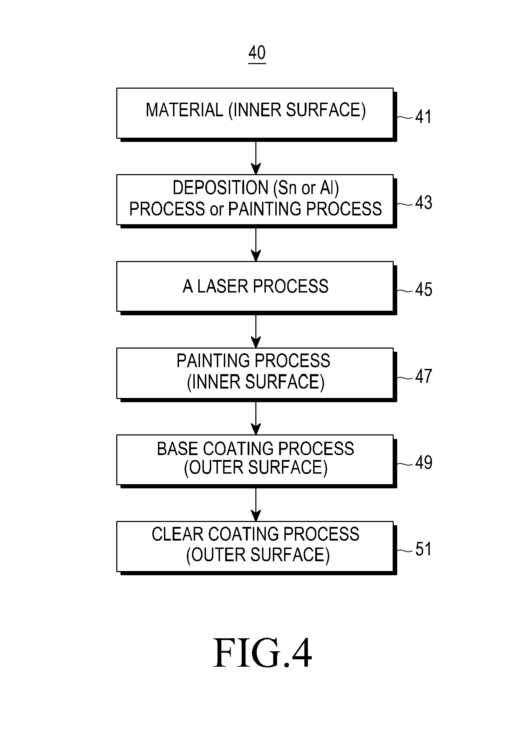

FIGS. 3 and 4 illustrate respective methods 30, 40 of fabricating an injection-molded product, in which a metal layer is formed on an inner surface of an injection-molded material. As it is desired that a design pattern in the metal layer is visible from the outside, the injection-molded material should be a transparent or semi-transparent material.

Referring now to FIG. 3, the method 30 of fabricating an injection-molded product according to the third exemplary embodiment of the present invention includes a step 31 of manufacturing an injection-molded material through a forming process using a mold, a step 33 of forming a metal layer through a deposition or painting process, and removing a portion of the metal layer using a laser and forming a pattern 35, and preferably may include a step 37 of painting an inner (interior) surface of the injection-molded material and a step 39 of forming a clear coating layer, i.e. a hardened protective film on an outer (exterior) surface of the manufactured injection-molded material. As described above, the method of manufacturing an injection-molded product according to the exemplary embodiment of the present invention is used in forming the metal layer on the inner (interior) surface of the injection-molded material.

Here, since the processes of forming a pattern using a laser after forming the metal layer on the injection-molded material are the same as those of the prior exemplary embodiments of the present invention except that the metal layer is formed on the inner surface of the injection-molded material, a detailed description thereof is omitted.

The step 37 of painting the inner surface of the injection-molded material is adapted to protect the pattern realized by the metal layer and prevent the interior of a device housed by the fabricated injection-molded product from being seen from the outside. That is, the injection-molded material is made of a transparent or semi-transparent material to allow the pattern to be seen from the outside, and when the injection-molded material is used as a case for an electronic product such as a portable terminal, its interior parts can be seen from the outside. This hampers the appearance of the product, and the inner surface of the injection-molded material having a pattern on the inner surfaces thereof is coated to prevent the interior of the fabricated injection-molded product from being seen from the outside. After the painted layer is hardened, the paint of the painted layer becomes opaque to prevent the interior portion of the fabricated injection-molded product housing the electronic device from being seen from the outside.

Due to the painted layer formed by painting the inner surface of the injection-molded material, a color of the painted layer is contrasted with a color of the pattern, bringing the pattern into relief. Accordingly, since a pattern permeates the injection-molded product so as to be seen from the outside in a product to which the finished injection-molded product is to be applied, the appearance of the product can be appealing due to its cubic feeling and metallic gloss.

Referring now to FIG. 4, in the method 40 of fabricating an injection-molded product according to the fourth exemplary embodiment of the present invention, a step 41 of manufacturing an injection-molded material, a step 43 of forming a metal layer, a step 45 of removing a portion of the metal layer using a laser and forming a pattern, and a step 47 of painting an inner surface of the injection-molded material are substantially the same as in the third exemplary embodiment of the present invention. However, one difference is that a step 49 of forming a base coating layer on an outer surface of the injection-molding material is performed prior to a step 51 of forming a clear coating layer on the outer surface of the manufactured injection-molded material.

The step 49 of forming the base coating layer entails applying a base coat on the outer surface of the injection-molded material prior to forming the clear coating layer, in which a color of the final injection-molded product is determined by a color of the base coat. The base coating layer is preferably transparent or semi-transparent so as to exhibit a predetermined color after it is hardened so that the pattern by the metal layer can be seen from the outside.

While the invention has been shown and described with reference to several exemplary embodiments thereof, it will be understood by those skilled in the art that various changes in form and details may be made therein without departing from the spirit and scope of the invention as defined by the appended claims.

For example, although an injection-molded material is preferably a transparent or semi-transparent material when a metal layer forming a pattern is formed on an inner surface of the injection-molded material, and the injection-molded material may be a transparent, semi-transparent, or opaque material when a pattern is formed on an outer surface of the injection-molded material. However, when the injection-molded material is transparent or semi-transparent (translucent), the inner or outer surface of the injection-molded product may be painted to prevent its interior from being seen from the outside.

That is, when the injection-molded material is a transparent or semi-transparent material, a pattern may be formed on its inner or outer surface. On the other hand, when the injection-molded material is a semi-transparent material, it is preferable that the pattern by the metal layer is formed on the outer surface of the injection molded material and at least a clear coating layer is formed to prevent the metal layer from being damaged.

As describe above, according to the present invention, a metal layer is formed on an injection-molded material to provide a metallic feeling of a higher brightness, and while all the detailed exemplary embodiments of the present invention include a step of forming a metal layer, a pattern or a color that is difficult to be realized in an injection-molded product may be variously provided while forming various patterns on a surface of the injection-molded product by machining a surface of the injection-molded material using a laser even when the metal layer is not formed.

## Claims

1. A method of fabricating an injection-molded product, the method comprising:
manufacturing an injection-molded material using a mold (11,31,41);
forming a metal layer on an inner or outer surface of the injection-molded material (11, 33, 43); and
removing a portion of the metal layer using a laser, and forming a pattern (15, 35, 45) wherein the metal layer is formed through a deposition or painting process.

2. The method as claimed in claim 1, wherein the injection-molded product comprises a transparent or semi-transparent material, and the metal layer is formed on the inner surface of the injection-molded material.

3. The method as claimed in claim 2, further comprising: painting an inner surface of the injection-molded material after removing a portion of the metal layer and forming the pattern on the inner surface of the injection-molded material, and forming a painted layer.

4. The method as claimed in claim 3, wherein a paint used to paint the inner surface of the injection-molded material provides its own opaque color after drying.

5. The method as claimed in claim 2, further comprising: forming a clear coating layer on the outer surface of the injection-molded material (17, 29, 39,51).

6. The method as claimed in claim 5, further comprising: forming a base coating layer on the outer surface of the injection-molded material prior to forming the clear coating layer (27,49).

7. The method as claimed in claim 1, further comprising: forming a clear coating layer on the outer surface of the injection-molded material, after forming the metal layer on the outer surface of the injection-molded material, removing a portion of the metal layer, and forming the pattern on the outer surface of the injection-molded material.

8. The method as claimed in claim 7, further comprising: forming a base coating layer on the outer surface of the injection-molded material prior to forming the clear coating layer.

9. The method as claimed in claim 1, wherein the metal layer is formed by depositing tin or aluminum.

10. A method of fabricating an injection-molded product, the method comprising:
manufacturing an injection-molded material using a mold (11, 31, 41); and
machining an inner or outer surface of the injection-molded material using a laser, and forming a pattern (15, 35, 45).

11. The method as claimed in claim 10, further comprising: machining the outer surface of the injection-molded material using a laser (25), and forming a clear coating layer (29) on the outer surface of the injection-molded material machined using a laser.

12. The method as claimed in claim 11, further comprising: forming a base coating layer (27) on the outer surface of the injection-molded material prior to form the clear coating layer.

13. The method as claimed in claim 10, wherein the injection-molded material comprises a transparent or semi-transparent material and the inner surface of the injection-molded material is machined using a laser (25).

14. The method as claimed in claim 13, further comprising: painting the inner surface of the injection-molded material machined using a laser (37).

15. The method as claimed in claim 13, further comprising: forming a clear coating layer on the outer surface of the injection-molded material (17, 29, 30,51).
